# EUROPEAN PATENT APPLICATION

(11) **EP 2 730 191 A1**
(43) Date of publication of application: **14.05.2014**
(21) Application number: 12807488.7
(22) Date of filing: 03.07.2012
(51) Int. Cl.: A45C 9/00, B62B 1/04

(54) **HANDBAG CONVERTIBLE INTO A SUITCASE OR A SHOPPING CART**

(30) Priority: 06.07.2011 ES 201100620
(71) Applicant: Alpasobags Sociedad Limitada, 28001 Madrid (ES)
(72) Inventor: ORTIZ DÍAZ, Elías, E-28001 Madrid (ES)
(74) Representative: Stiebe, Lars Magnus
(86) International application number: PCT/ES2012/000181
(87) International publication number: WO 2013/004863

(57) **Abstract**

The invention relates to a handbag having concealed elements which, when revealed, transform the handbag for other uses. The essential features of the invention can be implemented in alternative embodiments with details that differ from the embodiment indicated in the example of the description while still falling within the scope for which protection is sought. Likewise, the invention can be manufactured in any shape or size using the most adequate materials, since all of the above is in line with the claims. The terms used in the description should always be interpreted in the broad, non-restrictive sense.

## Description

### OBJECT OF THE INVENTION

The object of the present invention, as the title of the invention suggests, is a handbag which not only can be transformed into a suitcase, but also into a trolley bag. That is to say, it refers to a handbag which has got all the appropriate structural and dimensional qualities of a handbag, and also has the peculiarity of being able to become a suitcase with the appropriate characteristics of a suitcase, i.e. a larger volume, and it can also be converted into a trolley bag.

This invention is characterized by its special and thought-out structural features, in particular because of the possibility of enlarging its inside volume, thanks to the extendable lateral sides and to the bottom of the bag which can also be unfolded, which allows to enlarge its volume across the full width of the bag.

Additionally, it is also a characteristic of this invention the fact of including a deployable handle by means of some telescopic extendable sections, which can be kept in a compartment prepared for them on the outer rear side.

Therefore, the present invention belongs to the field of handbags, especially referring to its structural features, and, in a specific way, to those features which allow the enlargement of its inside volume.

### BACKGROUND OF THE INVENTION

In the existing state-of-the-art, there are known suitcases in which some of their dimensions allow to increase their inside volume, by means of the liberation of part of the material from their sides, which would be folded, such material is liberated by the opening of a zip or a similar closing device.

There are also some handbags that can partially increase some of their dimensions, also by the liberation or unfolding of a part of the closing material of the handbag, which would be folded.

However, it is not known in the existing state-of-the-art handbags which due to their constructive characteristics allow conversion into a suitcase or a trolley bag with all the characteristics implied, including larger inside volume and an extendable telescopic handle to enable better transportation.

Therefore, the object of the present invention is a convertible handbag into suitcase and into trolley bag, which overcomes the limitations of the suitcases and handbags existing up to now, regarding the possibility to enable increasing their inside volume. The following description further describes the design of the handbag introduced above and the essence of the said handbag is stated in claim 1.

### DESCRIPTION OF THE INVENTION

The convertible handbag into a suitcase and a trolley bag consists of a proper handbag structure, with two frontal sides -a front part and a back part-corresponding with the larger surface sides of the handbag, and with two lateral sides. It has also got handles so that it can be held by hand.

The handbag, however, in addition to all the previously described characteristics, is equipped with means for keeping, unfolding and covering certain lateral folds, made on the sides of the bag which, once unfolded and extended allow an increase in the volume inside the bag regarding its transversal dimension, that is to say, its width.

Likewise, it is equipped with means for keeping, unfolding and covering certain means by means of which the bag can be pulled when converted into a suitcase.

At the bottom or base, the handbag is fitted with a retractable or extendable section in the transversal sense related to the larger dimension of the bag, so that when the width of the handbag is increased by the unfolding of the lateral folds, the bottom of the bag changes accordingly, that is to say, the transversal dimension increases in a similar manner to the increase of the width of the bag.

With the aim to carry the handbag once it has become a suitcase, apart from the extendable telescopic handle, the handbag has wheels at its bottom, which can be fixed or collapsible, depending on the use of the object at the time as a handbag, a suitcase or a trolley bag.

Optionally, an extra feature of the handbag is that it can be further equipped with means for increasing its height, which results in a larger inside volume, having, in a possible embodiment with means for keeping, unfolding and covering certain folds made around the perimeter of the bag.

Thanks to the features described, a bag is achieved that can be used as a handbag with all the components thereof, and which can be converted into a suitcase, by unfolding or extending its lateral sides, and optionally of its frontal sides, further having a telescopic extendable handle and rolling means, which may at least be collapsible.

### EXPLAINATION OF THE FIGURES

To accompany the description which follows, and with the aim of making its characteristics clearer, the present descriptive statement is accompanied by a set of plans whose figures represent the most significant details of the invention, and are illustrated in a non-restrictive way.
In Figure 1, the representation in perspective of the handbag object of the invention can be seen, before it has undergone any change, and when used as a handbag.
In Figure 2, a detail of the section obtained by cutting one lateral side by plan AB, is shown.
In Figure 3, the bag has been represented in perspective, with the telescopic handle unfolded, and some details of the lateral sides.
In Figure 4a a lateral side is shown in detail, partially opened and at the beginning of the extension process.
Figure 4b shows the same previous figure with the lateral sides almost in full extension.
In Figure 5 the bottom of the bag is shown before it has been unfolded.
In Figure 6 a front view of the bottom of the bag is shown, with the retractable section totally unfolded.
In Figure 7, a lateral view of the bottom of the bag is shown, where the wheels are displayed.
In Figure 8, a representation of the bottom of the bag is shown, seen from outside, where the relative position adopted by the two parts that make the bottom of the bag can be seen.
Figure 9 shows a further embodiment of the bag which allows increasing its height.
Figure 10 shows a detail of the means for keeping, unfolding and hiding the folds of vertical extension of the bag.
Figure 11 shows the bag with its extendable telescopic handle totally extended, and also the unfolding of the bag according to its height.

### PREFERRED EMBODIMENT OF THE INVENTION

A preferred embodiment of the invention follows, in accordance with the figures.

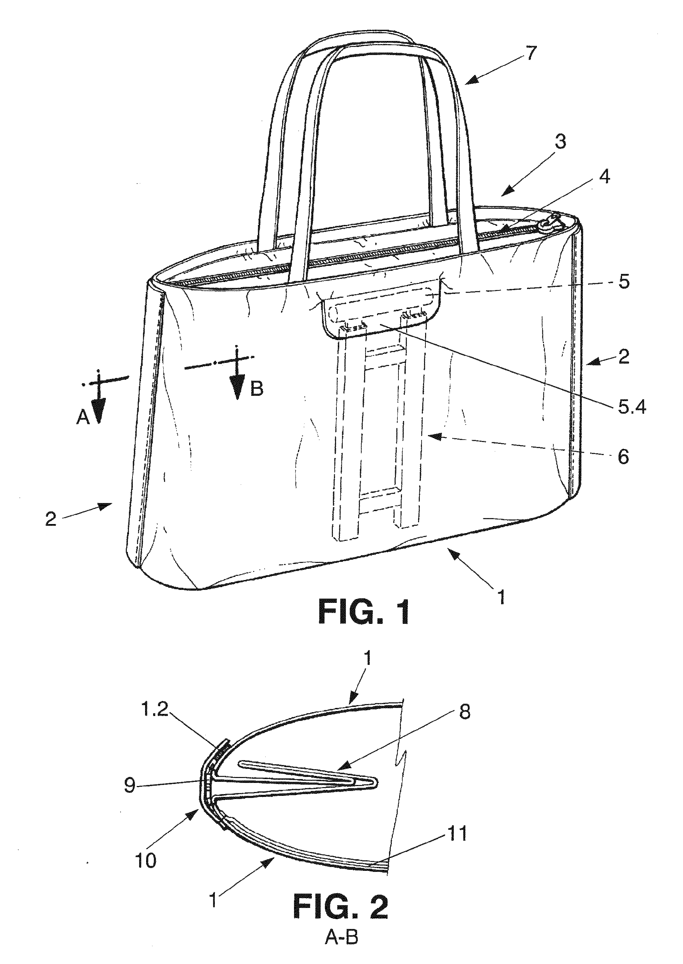

In Figure 1, it can be seen that the bag has got two frontal parts (1): a front part and a back part, corresponding with the larger surface sides of the bag. It also has two lateral sides (2) which are located between the frontal parts. It has got closing means arranged on the upper part (3) of the bag, which in the Figure have been represented by a zip (4), and handles (7) to carry the bag.

In broken lines in Figure 1 a housing (6) for the retractable handle (5), which is covered by a flap (5.4), is shown.

In Figure 2, a possible way to make the means for keeping, unfolding and covering the folds (8) in the lateral sides (2) is shown.

In the area where the frontal parts (1) join the lateral sides (2), the frontal parts have folds (8) arranged inside the lateral sides, and closed by closing means which, in a possible embodiment can be a zip (9). The said closing means are covered by a closing flap (10) which is fixed at one of its ends, and can be shut at its other end by another kind of closing means (1.2) based on a hook and loop fastener commercially known as Velcro ®.

In order to strengthen the lateral sides, there can be some reinforcements (11) on such lateral sides, which may totally or partially cover the back part of the bag where the extendable telescopic handle (5) is located, with the purpose of giving this side a greater strength.

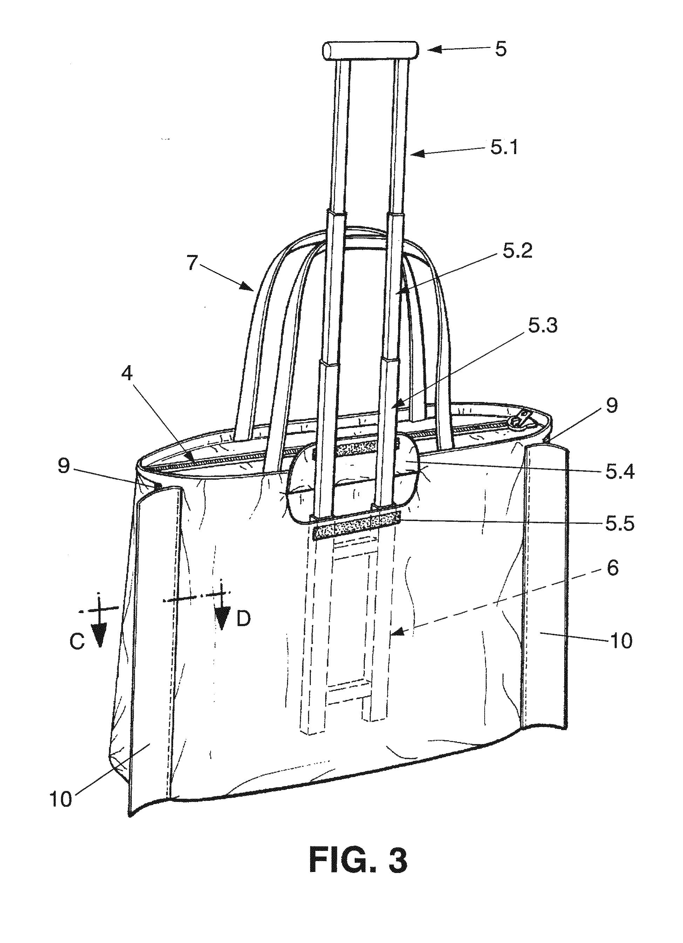

In Figure 3, the handbag can be seen with its extendable handle (5) totally extended, in which it can be seen that it has got three extendable sections (5.1), (5.2) and (5.3), but it could also have a different number of extendable telescopic sections. These sections are kept retracted in the housing (6) which has been represented by broken lines, and are arranged at the bottom back part of the bag. The flap (5.4) which hides the extendable handle (5) once it has been retracted into its housing (6) is also shown, said closing flap (5.4) being fixed by closing means, which can be based on a plurality of plurality of loops on which are engageable a plurality of little hooks located on an opposite part (5.5) where it has to be closed.

In this Figure 3 the closing flap (10) partially opened on both sides can be seen, and on the upper parts of both sides the closing means can be seen, which in the case shown is a zip (9).

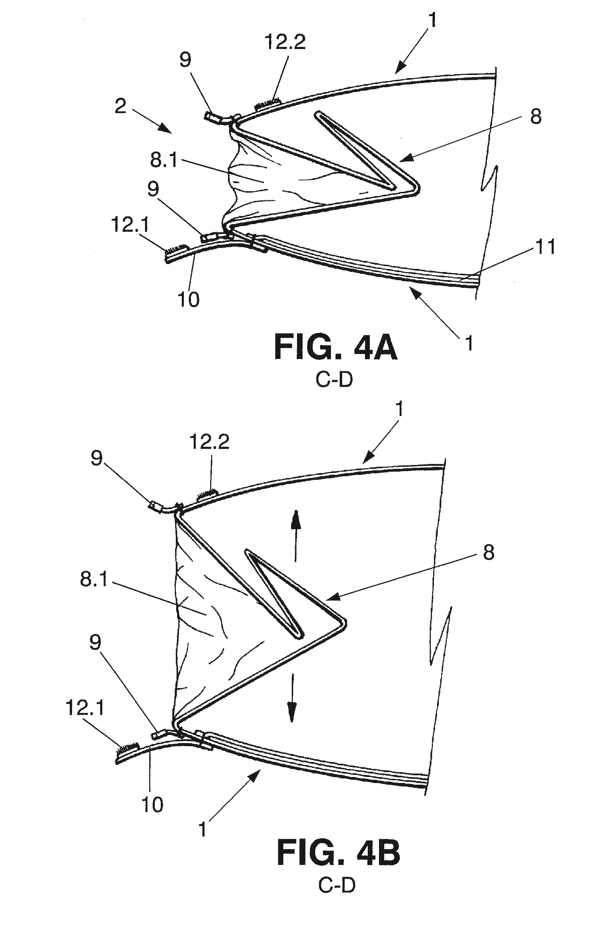

In Figures 4a and 4b the process of unfolding or expansion of the lateral sides is shown, where it can be observed that in combination with the folds in the lateral sides (8) there is some material (8.1) which covers the separation or expansion of the bag width. When the bag is folded in its lateral sides, said material (8.1) is kept next to the folds (8) in the lateral sides (2), and it is covered by the zip (9).

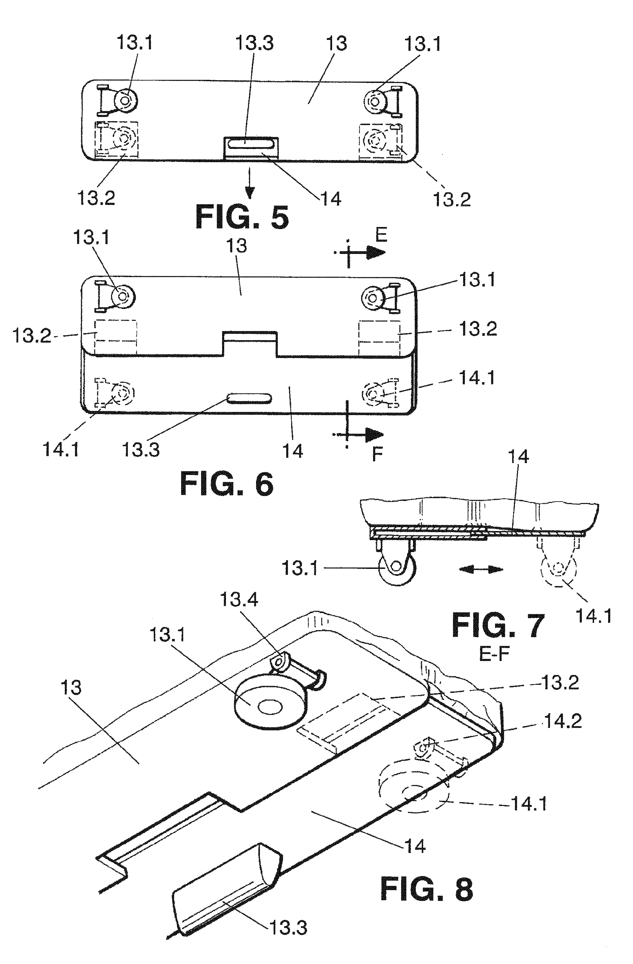

In Figure 5 the front sight of the bottom of the bag is shown, seen from its outside part, in which it is important to highlight the presence of a fixed bottom piece (13), on which there are arranged at least two rolling means, such as wheels (13.1), and also the presence of holes (13.2) is shown.

In Figure 6, it is shown how the bottom can be extended widthwise by unfolding of an extendable part or piece (14), which can be retracted or hidden under the fixed bottom piece (13). Said extendable piece (14) is also equipped with rolling means, which have been represented by wheels (14.1) in the figure, which are placed in the holes (13.2) made on the fixed bottom piece (13).

Both the wheels (14.1) and the wheels (13.1) can be collapsible or fixed, adapting to the most appropriate configuration.

In Figure 7 it is observed how the extendable piece can be opened or closed (14) in relation to the fixed bottom piece (13), even in the case of having the wheels unfolded.

In Figure 8 it is observed that the extendable bottom piece (14) is also equipped with a support piece (13.3) which, optionally, allows increasing the stability of the bag once converted into a suitcase.

Both the wheels (13.1) and the wheels (14.1) can additionally be folded, for which purpose both wheels have got a folding axis (13.4) and (14.2), respectively, which axis allows the wheels to be folded so that they can be left as unobtrusively as possible at the bottom of the bag.

The bottom of the bag, where the extendable wheels and the fixed ones are hidden, is closed using any closing means as has been already described, or also by a zip on the outer surface of the bottom and which is not visible.

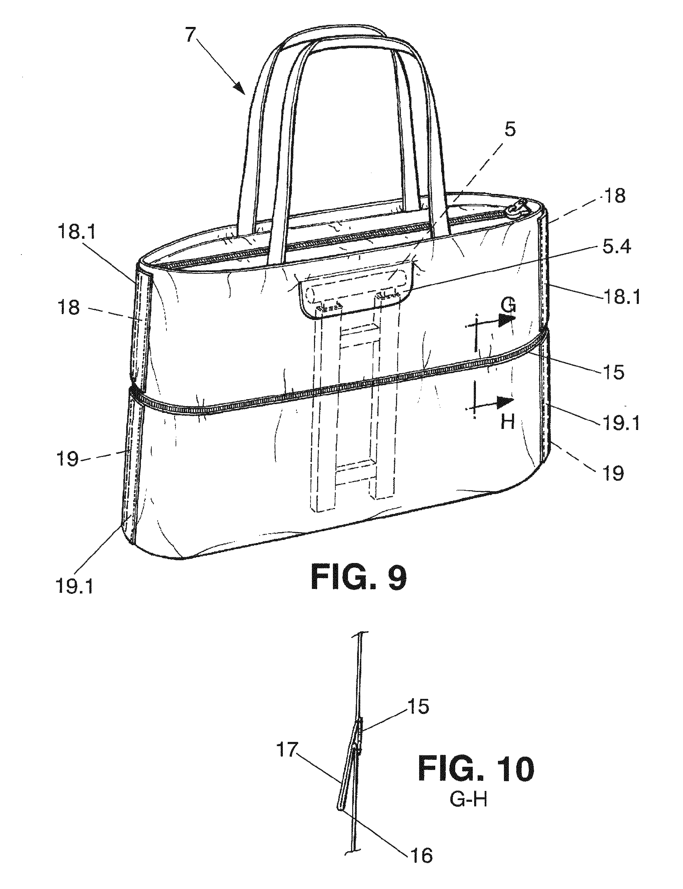

In Figures 9 and 10 a further embodiment is shown, which increases the capacity of the suitcase by allowing an increase in its height, for the purpose of which it is equipped with means for keeping, unfolding and hiding folds (16) made around the perimeter of the front parts (1) of the bag. These folds are hidden by closing means which in the represented example is a zip (15).

In Figure 9 a further embodiment of the bag can also be seen, relating to the unfolding of the lateral sides (2), which are equipped with zips divided in two sections, an upper zip (18) and a lower zip (19), so that the bag can be expanded to make it higher by means of the zip (15).

Additionally, the zips (18) and (19) can remain covered by some closing flaps (18.1) and (19.1) respectively, as it is shown in Figure 9.

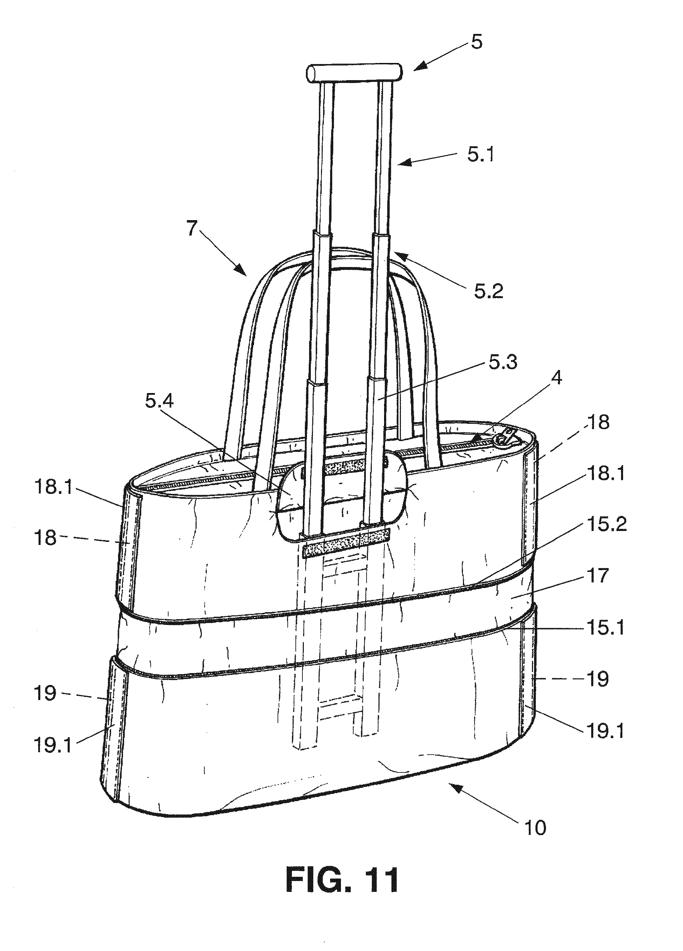

Figure 11 shows how the bag would be like if the front parts (1) are unfolded along the perimeter folds (16), being it visible that it can be equipped with a piece of fabric (17) to cover the folds (16) and it extends between the two halves of the zip (15.1) and (15.2).

As it can be seen, the fact that it is equipped with closing zips on its lateral sides does not stop the bag from unfolding to increase its height, therefore thanks to the combination of the zips (15), (18) and (19) the bag can be extended both in width and height.

The invention, considering its essential design, can be made using alternative construction techniques that differ in detail to the one described here, which should be taken as an example of the description, and to which the protection claimed would equally apply. Likewise, it can be made in any shape and size, with the most appropriate materials, as all these possibilities are covered in the spirit of the claims.

The terms in which this statement has been described must be always taken in a wide and non-restrictive sense.

## Claims

1. Convertible handbag into suitcase and into trolley bag, which has two frontal parts (1), a front part and a back part, corresponding to the handbag larger surface sides, also having two lateral sides (2) located between the frontal parts, and having closing means on the upper part (3) of the bag, and with a fixed piece (13) and another extendable one (14) at the bottom, also having handles (7) for holding the bag, **characterised in that** it comprises:
- means for enabling placement, unfolding and covering some lateral folds (8) made on the sides of the bag, which allow, once they are unfolded and extended, to increase transversally the inside volume of the bag, that is to say, its width;
- means for enabling placement, unfolding and covering means by which it is possible to pull the bag once converted into a suitcase;
- a retractable or extendable section, in a transversal sense to the larger dimension of the bag, said section being arranged in its bottom or base.

2. Convertible handbag into suitcase and into a trolley bag according to claim 1, **characterized in that** the means for enabling placement, unfolding and covering along some lateral folds (8) from the lateral sides (2) consist of a zip (9) which is covered by a closing flap (10), fixed at one of its ends and which it closes at the other end by some closing means (12) based on a hook and loop fastener.

3. Convertible handbag into suitcase and into trolley bag according to claim 1, **characterized in that** the extendable handle (5) is equipped with several extendable sections (5.1), (5.2) and (5.3), situated on the side of the bag, which remain stored in a housing (6).

4. Convertible handbag into suitcase and into trolley bag according to claim 3, **characterized in that** it has got a flap (5.4) to cover the access to the housing (6), which hides the extendable handle (5) once it is stored in the housing (6), said closing flap (5.4) being fixed by closing means, which can be based on a plurality of loops on which are engageable a plurality of little hooks located on an opposite part (5.5) where it has to be closed.

5. Convertible handbag into suitcase and into trolley bag according to claim 2, **characterized in that** in combination with the lateral sides folds (8), there is some material (8.1) which covers the separation or enlargement of the width of the bag that is stored, which when it is folded is next to the folds (8) in the lateral sides (2), and it is covered by the zip (9).

6. Convertible handbag into suitcase and into trolley bag according to claim 1, **characterized in that** on the fixed bottom section (13) there is an extendable piece (14), which can be hidden under the fixed bottom section (13).

7. Convertible handbag into suitcase and into trolley bag according to claim 6, **characterized in that** both the fixed bottom piece (13) and the extendable piece (14) have at least two rolling means, such as wheels (13.1) and (14.1), respectively.

8. Convertible handbag into suitcase and into trolley bag according to claim 7, **characterized in that** both the wheels (13.1) and the wheels (14.1) are collapsible, for which purpose the wheels have a fold-away axis (13.4) and (14.2), respectively.

9. Convertible handbag into suitcase and into trolley bag according to claim 6, **characterized in that** the extendable piece (14) has a support piece (13.3).

10. Convertible handbag into suitcase and into trolley bag according to any of the previous claims, **characterized in that** it has means for storing, unfolding and hiding folds (16) associated to a piece of material (17) that covers the folds (16) made on the perimeter of the frontal parts (1) of the bag, said folds being hidden by a zip (15).

11. Convertible handbag into suitcase and into trolley bag according to any of the previous claims, **characterized in that** it has reinforcements (11) on the frontal back part where the extendable telescopic handle (5) is kept, and these reinforcements totally or partially cover the back part of the bag.

12. Convertible handbag into suitcase and into trolley bag according to any of the previous claims, **characterized in that** the zip (9) on the lateral sides is split in two sections, an upper zip (18) and a lower zip (19), and each one of them is covered by its own closing flap (18.1) and (19.1), respectively.
